# EUROPÄISCHE PATENTANMELDUNG

(11) **EP 2 113 349 A1**
(43) Veröffentlichungstag der Anmeldung: **04.11.2009**
(21) Anmeldenummer: 09005399.2
(22) Anmeldetag: 16.04.2009
(51) Int. Cl.: B27B 5/06

(54) **Plattenaufteilanlage**

(30) Priorität: 02.05.2008 DE 102008021997
(71) Anmelder: HOLZMA Plattenaufteiltechnik GmbH, 75365 Calw-Holzbronn (DE)
(72) Erfinder: Blaich, Markus, 75365 Calw-Stammheim (DE); Brock, Reiner, 72218 Wildberg (DE); Esser, Kim, 71116 Gärtringen (DE); Gsell, Rainer, Herrenberg (DE); Hartmann, Gerhard, 72224 Ebhausen-Rotfelden (DE); Martynenko, Sergey, 70188 Stuttgart (DE); Mörresheim, Arne, 75378 Bad Liebenzell (DE); Oertel, Wolfgang, 72461 Albstadt (DE); Seeger, Ingolf, 72160 Horb-Nordstetten (DE); Sörgel, Rudolf, 75385 Bad Teinach (DE)
(74) Vertreter: Dreiss

(57) **Zusammenfassung**

Die vorliegende Erfindung betrifft eine Plattenaufteilanlage, insbesondere Plattenaufteilsäge, umfassend einen vertikal beweglichen Druckbalken, der zum Halten eines Werkstücks auf einem Auflagetisch während eines Sägevorgangs pneumatisch auf das Werkstück abgesenkt werden kann, **dadurch gekennzeichnet, dass** in einem Bereich des Druckbalkens Mittel zu einem Aufbringen und/oder Lesen einer Information auf das bzw. von dem zu bearbeitenden Werkstück angeordnet sind.

## Beschreibung

Die Erfindung betrifft eine Plattenaufteilanlage, insbesondere eine Plattenaufteilsäge, nach dem Oberbegriff des Anspruchs 1.

Eine Plattenaufteilanlage der eingangs genannten Art ist aus der DE 10 2004 062 048 A1 bekannt. Bei dieser liegen großformatige plattenförmige Werkstücke auf einem Auflagetisch und werden mittels einer Vorschubvorrichtung zu einer Säge hin bewegt. Oberhalb der Sägelinie ist ein vertikal beweglicher Druckbalken angeordnet, der pneumatisch auf das Werkstück abgesenkt werden kann, wodurch das Werkstück während einer Bearbeitung zwischen dem Druckbalken und dem Auflagetisch verklemmt wird. Die Werkstücke werden beispielsweise für die Herstellung von Möbeln verwendet. Eine Kennzeichnung der bearbeiteten, zugeschnittenen Werkstücke erleichtert später eine weitere Verarbeitung. Dazu werden in herkömmlichen Arbeitsverfahren mit einem separaten Drucker Etiketten gedruckt, um diese später manuell auf das entsprechend bearbeitete Werkstück zu kleben.

Aufgabe der Erfindung ist es, eine Plattenaufteilanlage der eingangs genannten Art so weiterzuentwickeln, dass das Kennzeichnen der bearbeiteten Werkstücke einfacher, schneller und damit kostengünstiger durchgeführt werden kann und die Plattenaufteilanlage kompakt baut.

Zur Lösung der Aufgabe wird eine Plattenaufteilanlage mit den Merkmalen des Anspruchs 1 vorgeschlagen. Weitere für die Erfindung wichtige Merkmale finden sich in der Beschreibung und der Zeichnung, wobei die Merkmale sowohl in Alleinstellung als auch in unterschiedlichen Kombinationen für die Erfindung wichtig sein können, ohne dass hierauf jeweils explizit hingewiesen wird.

Bei der erfindungsgemäßen Plattenaufteilanlage wird die Andrückeinrichtung genutzt, um durch ein entsprechendes Mittel eine Kennzeichnung auf dem Werkstück aufzubringen um anschließend das Werkstück identifizieren zu können. Zu einer automatischen Identifikation beim Bearbeiten des Werkstücks auf der Plattenaufteilanlage kann die Plattenaufteilanlage auch eine Leseeinrichtung zum Lesen der Kennzeichnung umfassen. Eine solche Kennzeichnung enthält beispielsweise Informationen über kennzeichnende Merkmale des entsprechenden Werkstücks und kann bspw. einen sog. Strich- oder Barcode zur opto-elektronischen Nachverarbeitung, ein Nummerierungsschema oder Angaben über die Abmessungen und/oder des Verwendungszwecks des Werkstücks enthalten. Durch die Erfindung wird ein manueller und separater Arbeitsgang zum Kennzeichnen der Werkstücke vermieden, wodurch Zeit und Kosten gespart werden. Durch die Anbringung des Mittels zum Aufbringen und/oder Lesen einer Information an der Andrückeinrichtung wird darüber hinaus an anderer Stelle der Plattenaufteilanlage Platz gespart.

Die Unteransprüche haben vorteilhafte Ausgestaltungen der Erfindung zum Gegenstand. So wird vorgeschlagen, dass das Mittel zum Aufbringen und/oder Lesen einer Information in Längsrichtung eines Druckbalkens beweglich ist. Dies ist vorteilhaft, um eine bevorzugte Position zum Aufbringen der Information auf dem Werkstück wählen zu können. Dabei kann die bevorzugte Position manuell vom Betriebspersonal eingestellt werden; die bevorzugte Position kann allerdings auch automatisch gefunden oder eingestellt werden. So ist es bspw. möglich, dass Sensoren zumindest teilweise die äußeren Begrenzungen des Werkstücks identifizieren. Eine Steuer- und/oder Regeleinrichtung analysiert die Sensorinformation (gegebenenfalls mit Positionsinformation einer Vorschubeinrichtung für die Werkstücke) und positioniert daraufhin das Mittel zum Aufringen und/oder Lesen einer Information an eine geeignete Stelle. Andererseits kann das Bedienpersonal über eine Datensichtstation die gewünschte Position eingeben, welche dann in der Steuer- und/oder Regeleinrichtung gespeichert und entsprechend zum gesteuerten Positionieren des Mittels verarbeitet wird. Als Voraussetzung hierzu ist es in jedem Fall nötig, dass das Mittel beweglich gelagert ist, vorzugsweise auf oder an einer Schiene und dass das Mittel einen Vorschubantrieb, bspw. einen Elektromotor umfasst.

In der Steuer- und/oder Regeleinrichtung kann vorteilhafterweise auch das Beenden des Aufbring- bzw. Lesevorgangs überwacht werden, um zu verhindern, dass ein Verarbeitungsvorgang der Werkstücke schneller als der Aufbring- bzw. Lesevorgang abgeschlossen ist.

Ferner wird vorgeschlagen, dass das Mittel zum Aufbringen einer Information mindestens einen Drucker oder mindestens ein Lasergerät umfasst. Zum Kennzeichnen der Werkstücke wird also vorteilhafterweise eine handelübliche Einrichtung verwendet, die kostengünstig beschafft werden kann. In einer aufwendigeren Ausführungsform kann über Eingaben an der Datensichtstation die Steuer- und/oder Regeleinrichtung und/oder über Auswerten von Betriebszustandsinformationen und/oder Auswerten von Sensorinformationen eine Buchstaben/Ziffernkombination zur Kennzeichnung des Werkstücks in der Steuer- und/oder Regeleinrichtung aufgesetzt werden. Die Steuer- und/oder Regeleinrichtung stellt dabei eine eindeutige Identifizierung eines jeden Werkstücks durch entsprechende Modifikation der Buchstaben/Ziffernkombination sicher. Die Art und Weise der Modifikation wird zuvor vom Bedienpersonal über die Datensichtstation der Steuer- und/oder Regeleinrichtung mitgeteilt. Die Kennzeichnung kann zusätzlich durch einen Strichcode (Barcode) verschlüsselt werden, um gegebenenfalls die opto-elektronische Nachverarbeitung zu ermöglichen.

Ergänzend wird vorgeschlagen, dass das Mittel zum Aufbringen einer Information so ausgebildet ist, dass es die Information direkt auf das Werkstück aufbringt. Dazu wird die Kennzeicheninformation im Mittel entsprechend umgesetzt und an der zuvor definierten Position auf dem Werkstück abgesetzt. Dies ist wegen der Automatisierung zeitsparend und damit auch kostenreduzierend.

Außerdem wird vorgeschlagen, dass das Mittel zum Aufbringen einer Information mindestens ein Etikettiergerät umfasst.

Hierzu wird vorzugsweise im Voraus eine Vorratsrolle mit untereinander unterscheidbaren und selbstklebenden Etiketten erzeugt. D.h., dass bei jedem Kennzeichnungsvorgang das Etikettiergerät sequentiell ein Etikett nach dem anderen auf die zuvor definierte Position auf dem Werkstück klebt, beispielsweise, indem es das Etikett auf das Werkstück bläst. Es ist auch möglich, dass die oben beschriebene von der Steuer- und/oder Regeleinrichtung aufbereitete Information zunächst von einem internen Drucker oder einer internen Lasereinrichtung auf ein selbstklebendes Etikett gedruckt wird und anschließend das Etikett automatisch von dem Etikettiergerät zur Kennzeichnung des Werkstücks auf das Werkstück geklebt wird. Für den Fall, dass dieses Etikett ausschließlich zur logistischen Steuerung innerhalb einer Verarbeitungsfirma benötigt wird, hat dies den Vorteil, dass diese Information zu einem geeigneten Zeitpunkt, bspw. vor einem Verbauen des Werkstücks durch die Wahl eines geeigneten Klebers leicht und ohne Beeinträchtigung des Werkstücks entfernt werden kann. Die Verwendung von Etiketten hat gegenüber dem Aufdruck außerdem den Vorteil, dass bei einer rauen Oberfläche des Werkstücks der Aufdruck eventuell nur schlecht lesbar ist. Ein sauber gedrucktes Etikett ist jederzeit gut lesbar.

Ergänzend hierzu wird vorgeschlagen, dass das Etikettiergerät ein Radio Frequency Identification RFID-Etikett aufbringt. Die RFID-Technik bietet eine besonders komfortable Möglichkeit Informationen zu speichern und zu lesen.

Des Weiteren wird vorgeschlagen, dass das Mittel zum Aufbringen und/oder Lesen einer Information auf jener Seite der Andrückeinrichtung angeordnet ist, die zu einer Vorschubeinrichtung der Plattenaufteilanlage zeigt. Dies hat den Vorteil, dass durch das Halten des Werkstücks durch die Andrückeinrichtung und die Vorschubvorrichtung ein Verrutschen des Werkstücks beim Drucken, Etikettieren bzw. Lesen verhindert wird.

Alternativ oder ergänzend wird dazu vorgeschlagen, dass das Mittel zum Aufbringen und/oder Lesen einer Information auf jener Seite der Andrückeinrichtung angeordnet ist, die zu einem Entnahmetisch der Plattenaufteilanlage zeigt. Dies gestaltet das Arbeiten mit der Plattenaufteilanlage noch effizienter und flexibler.

Eventuell sind Längsschnitte zu berücksichtigen. So kann es nötig sein, dass mehrere Kennzeichnungen auf dem Werkstück anzubringen sind. Deshalb wird ergänzend vorgeschlagen, dass mehrere Mittel zum Aufbringen und/oder Lesen einer Information vorgesehen sind. Dazu müssen diese entweder vor dem Druckvorgang manuell oder automatisch abhängig von der Lage des Längsschnitts oder der Längsschnitte positioniert werden

Zum Absetzen des Kennzeichens kann die Abwärtsbewegung der Andrückeinrichtung ausgenutzt werden. Möglich ist aber auch, dass das Mittel zum Aufbringen und/oder Lesen einer Information relativ zur Andrückeinrichtung vertikal beweglich ist. Das bedeutet, dass das Mittel zum Aufbringen und/oder Lesen einer Information selbstständig eine Bewegung in Richtung des Werkstücks durchführt. Dies macht die Vorrichtung flexibler und stellt ein sauberes Aufbringen und/oder Lesen der Information sicher.

Besonders vorteilhaft ist auch, wenn das Mittel zum Aufbringen und/oder Lesen einer Information eine Einrichtung zur Reinigung der Oberfläche des Werkstücks umfasst. Dies kann bevorzugt durch eine Abblaseinrichtung geschehen, die sicherstellt, dass das Aufbringen und/oder Lesen der Information auf einer möglichst sauberen, von Sägemehl befreiten Oberfläche des Werkstücks durchgeführt wird. Dies macht den Aufbring- bzw. Lesevorgang sicherer.

Außerdem wird vorgeschlagen, dass das Mittel zum Lesen einer Information einen Barcodescanner und/oder eine Kamera umfasst. Dadurch ist es möglich, einen auf dem Werkstück bereits aufgetragenen Barcode zu lesen und diese Information an die Steuer- und/oder Regeleinrichtung zu senden. In der Steuer- und/oder Regeleinrichtung können dann Entscheidungen zur weiteren Verarbeitung des Werkstücks gefällt werden. Dies erleichtert weiter die Arbeit des Bedienpersonals.

### Beschreibung der Figuren

Nachfolgend wird anhand der Figuren ein bevorzugtes Ausführungsbeispiel der Erfindung näher erläutert. Es zeigen:
- Figur 1: eine schematische Seitenansicht einer Plattenaufteilanlage, und
- Figur 2: eine perspektivische Darstellung eines Druckbalkens der Plattenaufteilanlage von Figur 1 aus Figur 1 mit zwei daran angeordneten Drucker.

### Detaillierte Beschreibung

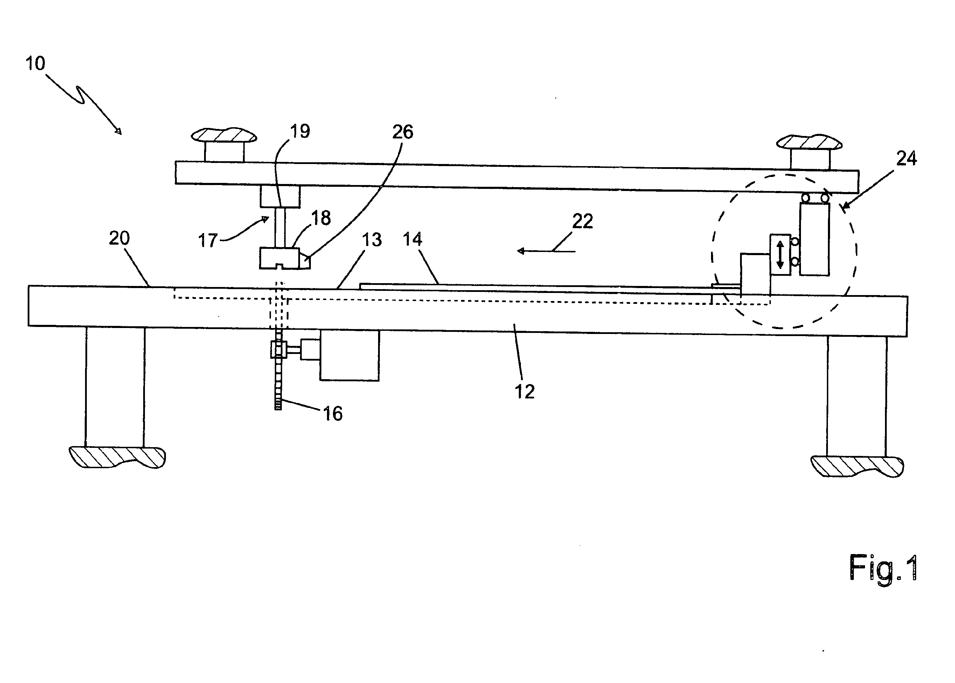

In Figur 1 trägt eine Plattenaufteilanlage insgesamt das Bezugszeichen 10. Sie umfasst einen horizontalen Auflagetisch 12, auf dessen Auflagefläche 13 ein großformatiges plattenförmiges Werkstück 14 liegt.

Die Plattenaufteilanlage 10 umfasst ferner eine Kreissäge 16, die in einer Richtung senkrecht zur Zeichnungsebene und darüber hinaus in einer Richtung senkrecht zum Auflagetisch 12, also vertikal verschoben werden kann. Mit der Säge 16 kann das Werkstück 14 in einzelne Streifen aufgeteilt werden. Um während des Sägens das Werkstück 14 sicher in Position zu halten, ist oberhalb der Säge 16 ein vertikal beweglicher Druckbalken 18 einer Andrückeinrichtung 17 vorhanden, der durch eine Pneumatik 19 bewegt wird. Dieser kann während des Sägens auf das Werkstück 14 abgesenkt werden, so dass das Werkstück 14 zwischen Druckbalken 18 und Auflagetisch 12 verklemmt ist. Das Werkstück 14 liegt nach einem Zersägen auf einem Entnahmetisch 20, der vorzugsweise als Luftkissentisch ausgeführt ist, um das Werkstück 14 kraftsparend, annähernd reibungsfrei und damit auch beschädigungsfrei verschieben und transportieren zu können.

Um von der Säge 16 in einzelne Streifen aufgeteilt werden zu können, ist das Werkstück 14 in Vorschubrichtung (Pfeil 22) durch eine Vorschub- und Spannvorrichtung 24 bewegbar.

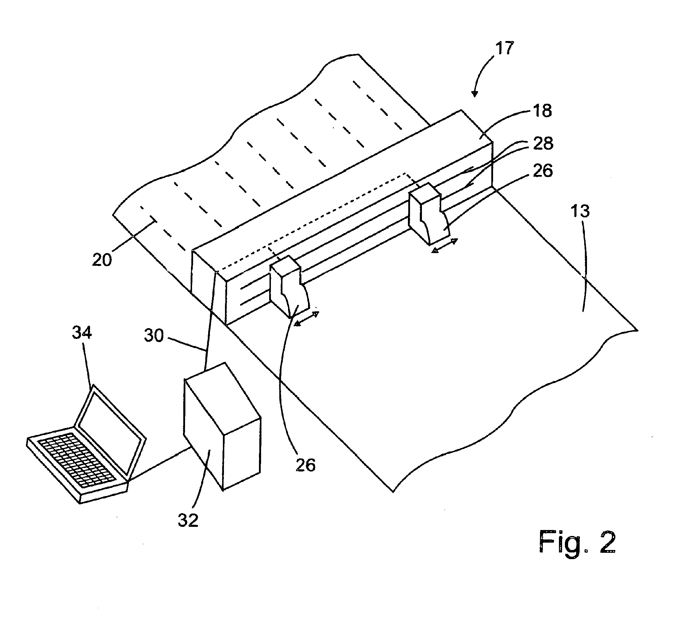

Zu einer nachträglichen Identifizierung bzw. logistischen Steuerung der zersägten Werkstücke 14 innerhalb einer Verarbeitungsfirma ist es vorteilhaft, wenn die Werkstücke 14 an einer Oberfläche der Werkstücke 14 lesbar gekennzeichnet sind und dieser Vorgang weitestgehend automatisch durchgeführt wird. Dazu umfasst der Druckbalken 18 an einer zur Vorschub- und Spannvorrichtung 24 zeigenden Seite zwei als Drucker 26 ausgebildete Mittel zum Aufbringen einer Kennzeichnung (in Figur 1 ist nur ein Drucker 26 sichtbar). Diese Drucker 26 drucken während des Sägevorgangs eine Kennzeichnung auf die Oberfläche der zu bearbeitenden Werkstücke 14. Eine detaillierte Beschreibung der Andrückeinrichtung 17 und der Drucker 26 mit deren Funktion zur Kennzeichnung der Werkstücke 14 folgt mit der Beschreibung zu Figur 2.

Bei einer nicht gezeigten Ausführungsform kann das Mittel zum Aufbringen und/oder Lesen einer Information auch auf jener Seite der Andrückeinrichtung angeordnet sein, die zu dem Entnahmetisch der Plattenaufteilanlage zeigt. Möglich ist auch, dass zu beiden Seiten der Andrückeinrichtung solche Mittel vorhanden sind.

Figur 2 zeigt die Druckbalkeneinrichtung 17 der Plattenaufteilanlage 10 in einer perspektivischen Ansicht. An der Seite des Druckbalkens 18, die zur Vorschubvorrichtung 24 zeigt, weist der Druckbalken 18 zwei Drucker 26 auf. Die Drucker 26 sind auf zwei in Richtung einer Längserstreckung des Druckbalkens 18 angeordneten Schienen 28 beweglich gelagert. Die Schienen 28 sind so angeordnet, dass eine Druckfläche der Drucker 26 im Wesentlichen bündig mit einer Unterseite des Druckbalkens 18 ist. Beide Drucker 26 umfassen jeweils eine Druckeinrichtung (nicht sichtbar) und einen Vorschubantrieb (nicht sichtbar), z.B. ein elektrisch antreibbarer Motor, eine Pneumatikachse, etc zur Bewegung der Druckeinrichtung längs der Schienen 28. Die Drucker 26 sind über eine Steuer- und Versorgungsleitung 30 mit einer Steuereinrichtung 32 verbunden. Die Steuereinrichtung 32 ist in Figur 2 als separate Einheit dargestellt, sie kann jedoch auch an nahezu allen beliebigen Stellen in der Plattenaufteilanlage 10 integriert sein. Die Steuerleitung und die Versorgungsleitung können natürlich auch voneinander getrennte Leitungen sein.

Ein Bedienpersonal der Plattenaufteilanlage 10 kann über eine Datensichtstation 34 Eingaben für die Steuereinrichtung 32 tätigen. Es sei darauf hingewiesen, dass die Datensichtstation 34 üblicherweise zum Betreiben der Plattenaufteilanlage 10 ohnehin Bestandteil derselben ist und nicht zur Realisierung der automatischen Kennzeichnung der Werkstücke 14 gesondert angeschafft werden muss.

Die Kennzeichnung der Werkstücke 14 in der Plattenaufteilanlage 10 funktioniert im Wesentlichen folgendermaßen:

Zu Beginn einer Verarbeitungsserie von Werkstücken 14 gibt das Bedienpersonal der Plattenaufteilanlage 10 Informationen zur Kennzeichnung der Werkstücke 14 des Schnittplans ein. Die Eingabeinformationen werden von der Steuereinrichtung 32 verarbeitet. Eine Verarbeitungsserie kann bspw. eine gleichgestaltete Verarbeitung von Werkstücken 14 darstellen. Die Eingabeinformationen enthalten bspw. Angaben über die Auswahl und die Druckposition der beiden Drucker 26 und ein Nummerierungsschema mit einem numerischen Unterscheidungsmerkmal für die einzelnen Werkstücke 18. Dabei muss eine Angabe gemacht werden, in welcher Weise sich das Unterscheidungsmerkmal in einer Sequenz unterscheiden soll (bspw. sequenzielles Hochzählen einer Zahlengruppe). Das Nummerierungsschema kann darüber hinaus generelle Informationen zu den zu verarbeitenden Werkstücken enthalten und auf Wunsch auch als Strichcode (Barcode) ausgegeben werden. Sinnvolle Zusatzangaben, die ebenfalls auf dem Aufdruck erscheinen sollen, können angefügt werden. Bei der Eingabe der Informationen zur Kennzeichnung der Werkstücke 14 ist zu berücksichtigen, dass vor oder nach einem Sägevorgang das Werkstück 14 nochmals in Längsrichtung zerteilt werden kann. Dies macht eine Mehrfachkennzeichnung notwendig. Die Plattenaufteilanlage 10 in der bevorzugten Ausführungsform weist hierzu zwei Drucker 26 auf. Zu einer Absicherung der Eingabeinformationen auf Richtigkeit und Vollständigkeit wird das Bedienpersonal an der Datensichtstation 34 softwaremäßig geführt.

Alle diese Informationen werden in der Steuereinrichtung 32 verarbeitet und aufbereitet und zur jeweiligen Steuerung über die Steuer- und Versorgungsleitungen 30 nach einem jeweiligen Niederdrücken des Druckbalkens 18 an den oder die Drucker 26 (je nach Auswahl) gesendet. Nach dem Niederdrücken des Druckbalkens 18 sendet die Steuereinrichtung 32 ein Steuersignal an die oder den Drucker 26, die den in dem jeweiligen Drucker 26 integrierten Vorschubantrieb in eine vorgegebene Richtung versetzt und dabei den Drucker 26 auf der Schiene 28 auf eine gewünschte Position fährt, und sendet die Druckinformation an den oder die Drucker 26. Der jeweils aktivierte Drucker 26 führt durch ein kurzzeitiges minimales Niederdrücken der Druckeinrichtung den Druckbefehl zum Drucken der aufbereiteten Druckinformation aus. Ein sauberer Druck auf dem Werkstück 14 ist gewährleistet, da das Werkstück 14 zum Zeitpunkt des Druckes für den gleichzeitig stattfindenden Sägevorgang durch den Druckbalken 18 (und die Vorschubvorrichtung 24) fest gehalten wird. Weitere Werkstücke 18 aus der gleichen Verarbeitungsserie können jetzt verarbeitet werden. Sie werden gemäß den an der Datensichtstation 34 eingegebenen Vorgaben automatisch unterscheidbar gekennzeichnet.

Zu Beginn einer Aufteilung des Werkstücks 14 nach einem nächsten Schnittplan ändert das Bedienpersonal der Plattenaufteilanlage 10 die Informationen zur Kennzeichnung der nächst folgenden Werkstücke an der Datensichtstation 34 und der oben beschriebene Kennzeichnungsvorgang beginnt auf der Basis der neuen Informationen von vorne. Die Informationen können auch automatisch entsprechend einem programmierten Aufteilplan erzeugt werden.

Im Folgenden werden weitere Ausführungsformen der Plattenaufteilanlage 10 zum Aufbringen der Information der Werkstücke 14 beschrieben. Alle diese Ausführungsformen sind nicht in Figuren dargestellt und können für sich alleine, aber auch in unterschiedlichen Kombinationen bzw. lediglich einzelne Merkmale daraus mit anderen Ausführungsformen verknüpft werden, ohne dass darauf expliziert hingewiesen wird.

In einer zweiten Ausführungsform der Plattenaufteilanlage können Sensoren die äußeren Abmessungen der Werkstücke, die auf der Auflageplatte aufliegen, erkennen. Diese Sensorinformation kann an die Steuereinrichtung gesandt werden, die dann automatisch die geeignete Position für den Druck festlegt. D.h. die Druckposition muss nicht mehr manuell über die Datensichtstation eingegeben werden. Zu einer weiteren Verfeinerung der automatischen Ermittlung der Druckposition können ergänzend hierzu Positionsinformationen der Vorschub- und Spannvorrichtung herangezogen werden. Diese Positionsinformationen können bspw. über weitere Sensoren ermittelt werden oder sind ohnehin einer Steuerung der gesamten Plattenaufteilanlage bekannt.

In einer dritten Ausführungsform der Plattenaufteilanlage können anstatt des oder der Drucker Etikettiergeräte, die selbstklebende Etiketten auf die Werkstücke aufkleben, eingesetzt werden. Dabei können die Etiketten vorbereitet sein und auf einer Vorratsrolle dem Etikettiergerät zur Verfügung stehen. Das Etikettiergerät beklebt sequentiell die Werkstücke mit dem entsprechenden Etikett. Die Verwendung von Etiketten ist besonders vorteilhaft, wenn bspw. zu einer logistischen Steuerung der Werkstücke die Kennzeichnung einen Strichcode (Barcode) enthalten soll oder wenn zu einem geeigneten Zeitpunkt die (firmeninterne) Kennzeichnung wieder beseitigt werden soll. Bei Verwendung eines geeigneten Klebemittels können Etiketten leicht und ohne Beschädigung der Werkstücke wieder entfernt werden.

In einer erweiterten vierten Ausführungsform der Plattenaufteilanlage ist es möglich, dass die in der bevorzugten ersten Ausführungsform aufbereitete Druckinformation intern (also in einer kombinierten Druck-und Etikettiereinrichtung) zunächst auf ein unbedrucktes selbstklebendes Etikett gedruckt wird und anschließend als bedrucktes Etikett durch die Etikettiereinrichtung automatisch auf das zu verarbeitende Werkstück geklebt wird. Strichcodes (Barcodes) können hierbei natürlich besonders gut auf dem Etikett dargestellt werden.

In einer sehr komfortablen fünften Ausführungsform der Plattenaufteilanlage können die Informationen in einem RFID-Transponder (Radio Frequency Identification /Kombination aus Transmitter und Responder) gespeichert und auf dem Werkstück angebracht werden. Bei diesem Verfahren können Informationen mit relativ einfachen Mitteln in einem passiven elektronischen Speicherelement gespeichert und elektronisch ausgelesen werden, ohne dass von einem Lesegerät Sichtkontakt zum Speicherelement besteht. Es können dabei bei Bedarf relativ große Mengen an Information gespeichert (>1k Bytes) und in einer Reichweite von mehreren Metern - also sehr unkompliziert - ausgelesen werden. Die RFID-Tranponder können sehr dünn und mit einer selbstklebenden Schicht ausgeführt und mehrfach verwendet werden. In einer sehr einfachen und preiswerten Ausführungsform des RFID-Transponders mit einem sehr kleinen Speicherelement kann nur eine Referenznummer auf dem RFID-Transponder gespeichert werden. In diesem Fall entspricht der Informationsgehalt des Speicherelements im Wesentlichen dem oben beschriebenen Strichcode. Alle Zusatzinformationen zu der Referenznummer bzw. des Strichcodes inklusive eines Datums und einer Uhrzeit können zentral in einem elektronischen Rechnernetzwerk, bspw. auf einem Server abgespeichert und verwaltet werden.

In einer sechsten Ausführungsform der Plattenaufteilanlage wird der Hardwareaufwand reduziert, dafür der Softwareaufwand erhöht. Dabei umfasst der Druckbalken lediglich einen einzigen Drucker oder ein einziges Etikettiergerät. Das Gerät ist dabei ebenfalls auf Schienen gelagert. Die in der Steuereinheit integrierte Software bietet hierbei die Möglichkeit, eine Mehrfachkennzeichnung auf dem Werkstück an unterschiedlichen, vorzudefinierenden Positionen vorzunehmen. Das bedeutet, dass nach dem Niederdrücken des Druckbalkens der Drucker bzw. das Etikettiergerät an mehreren Positionen auf dem Werkstück stoppt und Kennzeichnungen vornimmt. Eine Überwachung der Sägezeit in Bezug auf die Druckzeit muss vorgesehen sein, damit bei einem schnellen Sägevorgang der Druckbalken sich nicht vor Beendigung des Druckvorgangs vom Werkstück erhebt.

In einer siebten, sehr kompakt ausgeführten Ausführungsform der Plattenaufteilanlage ist der Drucker im Druckbalken, vorzugsweise in einem Bereich an einer Unterseite des Druckbalkens integriert. Dies ermöglicht nach Aufbereiten der Druckinformation in der Steuereinrichtung ein direktes Drucken der Kennzeichnung durch die Druckbewegung des Druckbalkens zum Festhalten des Werkstücks. Im Inneren des Druckbalkens kann der Druckbalken selbstverständlich auch Schienen zum Bewegen des Druckers aufweisen. Dies ermöglicht den Einsatz eines einfach aufgebauten Drucker ohne eigene Druckbewegung.

In einer achten sehr einfach ausgestalteten Ausführungsform der Plattenaufteilanlage ist zum Kennzeichnen der Werkstücke lediglich ein Zählwerk im Drucker integriert, welches nach jedem Druckvorgang um eine Ziffer weiterzählt. Bei dieser Ausführungsform erübrigt sich weitestgehend die Steuereinrichtung mit der Steuerleitung. Es besteht zudem die Möglichkeit, dass der Drucker manuell von Hand positioniert wird.

## Patentansprüche

1. Plattenaufteilanlage (10), insbesondere Plattenaufteilsäge, umfassend eine Andrückeinrichtung , die zum Halten eines Werkstücks (14) auf einem Auflagetisch (12) während eines Sägevorgangs auf das Werkstück (14) abgesenkt werden kann, **dadurch gekennzeichnet, dass** die Andrückeinrichtung (17) ein Mittel (26) zum Aufbringen und/oder Lesen einer Information auf ein bzw. von einem zu bearbeitenden Werkstück (14) umfasst.

2. Plattenaufteilanlage (10) nach Anspruch 1, **dadurch gekennzeichnet, dass** die Andrückeinrichtung (17) einen vertikal beweglichen Druckbalken (18) umfasst, und dass das Mittel (26) zum Aufbringen und/oder Lesen einer Information in Längsrichtung des Druckbalkens (17) beweglich ist.

3. Plattenaufteilanlage (10) nach einem der Ansprüche 1 oder 2, **dadurch gekennzeichnet, dass** das Mittel zum Aufbringen einer Information mindestens einen Drucker (26) oder eine Lasereinrichtung umfasst.

4. Plattenaufteilanlage (10) nach einem der Ansprüche 1 bis 3, **dadurch gekennzeichnet, dass** das Mittel zum Aufbringen einer Information (26) so ausgebildet ist, dass es die Information direkt auf das Werkstück (14) aufbringt.

5. Plattenaufteilanlage nach einem der Ansprüche 1 bis 4, **dadurch gekennzeichnet, dass** das Mittel zum Aufbringen einer Information mindestens ein Etikettiergerät umfasst.

6. Plattenaufteilanlage (10) nach Anspruch 5, **dadurch gekennzeichnet, dass** das Etikettiergerät ein Radio Frequency Identification- RFID-Etikett aufbringt.

7. Plattenaufteilanlage (10) nach einem der vorhergehenden Ansprüche, **dadurch gekennzeichnet, dass** sie eine Mehrzahl von Mitteln zum Aufbringen und/oder Lesen einer Information (26) umfasst.

8. Plattenaufteilanlage (10) nach einem der Ansprüche 1 bis 7, **dadurch gekennzeichnet, dass** das Mittel zum Aufbringen und/oder Lesen einer Information (26) auf jener Seite der Andrückeinrichtung (17) angeordnet ist, die zu einer Vorschubeinrichtung (24) der Plattenaufteilanlage (10) zeigt.

9. Plattenaufteilanlage (10) nach einem der Ansprüche 1 bis 8, **dadurch gekennzeichnet, dass** das Mittel zum Aufbringen und/oder Lesen einer Information (26) auf jener Seite der Andrückeinrichtung (17) angeordnet ist, die zu einem Entnahmetisch (20) der Plattenaufteilanlage (10) zeigt.

10. Plattenaufteilanlage (10) nach einem der vorhergehenden Ansprüche, **dadurch gekennzeichnet, dass** das Mittel zum Aufbringen und/oder Lesen einer Information(26) relativ zur Andrückeinrichtung (17) vertikal beweglich ist.

11. Plattenaufteilanlage (10) nach einem der vorhergehenden Ansprüche, **dadurch gekennzeichnet, dass** das Mittel zum Aufbringen und/oder Lesen einer Information (26) eine Einrichtung zur Reinigung der Oberfläche des Werkstücks (14) umfasst.

12. Plattenaufteilanlage (10) nach einem der vorhergehenden Ansprüche, **dadurch gekennzeichnet, dass** das Mittel zum Lesen einer Information (26) einen Barcodescanner und/oder eine Kamera umfasst.
